# FASCICULE DE BREVET EUROPEEN

(11) **EP 1 866 909 B1**
(45) Date de publication et mention de la délivrance du brevet: **04.04.2018**
(21) Numéro de dépôt: 06726317.8
(22) Date de dépôt: 06.04.2006
(51) Int. Cl.: G10L 15/26, G10L 25/78

(54) **PROCEDE DE SYNCHRONISATION ENTRE UNE OPERATION DE TRAITEMENT DE RECONNAISSANCE VOCALE ET UNE ACTION DE DECLENCHEMENT DU DIT TRAITEMENT**
VERFAHREN ZUR SYNCHRONISATION ZWISCHEN EINER SPRACHERKENNUNGS-VERARBEITUNGSOPERATION UND EINER DIE VERARBEITUNG AUSLÖSENDEN AKTION
METHOD FOR SYNCHRONIZATION BETWEEN A VOICE RECOGNITION PROCESSING OPERATION AND AN ACTION TRIGGERING SAID PROCESSING

(30) Priorité: 07.04.2005 FR 0550896
(43) Date de publication de la demande: 19.12.2007
(73) Titulaire: Orange, 75015 Paris (FR)
(72) Inventeur: MONNE, Jean, F-22700 Perros Guirec (FR); FERRIEUX, Alexandre, F-22560 Pleumeur Bodou (FR)
(86) Numéro de dépôt international: PCT/FR2006/050311
(87) Numéro de publication internationale: WO 2006/106272

(56) Documents cités:
- US-A1- 2003 004 712
- PATENT ABSTRACTS OF JAPAN vol. 2003, no. 12, 5 décembre 2003 (2003-12-05) & JP 2003 241794 A (NEC CORP), 29 août 2003 (2003-08-29)
- PATENT ABSTRACTS OF JAPAN vol. 016, no. 189 (P-1348), 8 mai 1992 (1992-05-08) & JP 04 024694 A (MATSUSHITA ELECTRIC IND CO LTD), 28 janvier 1992 (1992-01-28)
- PATENT ABSTRACTS OF JAPAN vol. 2002, no. 08, 5 août 2002 (2002-08-05) & JP 2002 108390 A (SHARP CORP), 10 avril 2002 (2002-04-10)

## Description

La présente invention concerne un procédé de synchronisation entre, d'une part, une opération de traitement par reconnaissance automatique de la parole d'une séquence vocale émise par un locuteur et, d'autre part, au moins une action dudit locuteur destinée à déclencher ledit traitement.

L'invention trouve une application particulièrement avantageuse dans le domaine de la reconnaissance automatique de la parole, notamment sur les terminaux multimédias comme les terminaux mobiles de la nouvelle génération, les assistants personnels (PDA) et les télécommandes incluant un microphone.

Lorsqu'il est en communication avec un serveur vocal équipé d'un système de reconnaissance automatique de la parole, un utilisateur d'un terminal mobile, par exemple, n'a en principe aucune action particulière à effectuer pour signifier au système de reconnaissance qu'il va énoncer une séquence vocale. En effet, le système est, soit toujours à l'écoute de l'utilisateur, soit en mesure de déterminer, à partir de la structure du dialogue entre le serveur et l'utilisateur, les instants où celui-ci va parler.

Dans le cas où il reste toujours à l'écoute de l'utilisateur, le système de reconnaissance recherche dans le flux sonore continu qu'il reçoit les zones temporelles susceptibles de correspondre à des séquences vocales émises par l'utilisateur. Cette recherche est effectuée, de manière connue, au moyen d'un dispositif dit de détection d'activité vocale. Bien entendu, pour que ce système fonctionne correctement, il faut que la détection d'activité vocale n'engendre pas trop de fausses alertes ou, à défaut, que celles-ci soient rejetées par le mécanisme de reconnaissance automatique de la parole.

C'est pourquoi la détection d'activité vocale donne les meilleurs résultats dans un contexte de prise de son de proximité, micro près de la bouche du locuteur, la réception de la voix de l'utilisateur étant favorisée au détriment de la capture des bruits environnants qui perturbent la reconnaissance.

Or, actuellement, avec le développement des terminaux multimédias, la prise de son dite « mains-libres » se généralise de plus en plus afin de permettre à l'utilisateur d'écouter des messages vocaux et de lire simultanément des informations affichés sur l'écran de son terminal. Dans ces conditions, la reconnaissance automatique de la parole devient plus délicate à mettre en oeuvre, le niveau du signal vocal utile diminuant alors que le bruit ambiant reste constant.

Le document JP 2003/241794 A divulgue un procédé de synchronisation entré d'une part une opération de traitement par reconnaissance automatique de la parole d'une séquence vocale émise par un locuteur et, d'autre part, au moins une action de locuteur destinée à déclencher ledit traitement. Par ailleurs, comme l'utilisateur dispose aujourd'hui d'autres médias que la voix, il devient difficile au système de reconnaissance de déterminer uniquement par la structure du dialogue les instants où le locuteur va prononcer une séquence vocale.

C'est pour remédier à ces inconvénients que certains terminaux sont équipés d'un moyen permettant à l'utilisateur de déclencher le traitement de reconnaissance vocale sur une action exercée, par exemple, sur une touche d'un dispositif connu sous le nom de « Push-toTalk ». Lorsque le locuteur démarre l'émission d'une séquence vocale, il appuie sur la touche de ce dispositif pour indiquer au serveur que le signal sonore qui suit est bien une séquence vocale qui doit être traitée par le système de reconnaissance de la parole. La touche est relâchée par le locuteur à la fin de l'énoncé de ladite séquence vocale. Ainsi, le système ne cherche à reconnaître l'utilisateur que lorsque celui-ci appuie sur la touche du dispositif « Push-to-Talk », évitant de cette manière toutes fausses alertes en dehors des périodes où la touche est enfoncée.

Cependant, le dispositif « Push-to-Talk » présente l'inconvénient que si l'utilisateur commence à émettre une séquence vocale avant d'appuyer sur la touche du dispositif ou si ladite séquence se poursuit après que l'utilisateur ait relâchée ladite touche, le système de reconnaissance utilisera, non pas la séquence réelle, mais une séquence temporellement tronquée, ce qui engendre beaucoup d'erreurs de reconnaissance.

Aussi, un problème technique à résoudre par l'objet de la présente invention est de proposer, selon la revendication 1, un procédé de synchronisation entre, d'une part, une opération de traitement par reconnaissance automatique de la parole d'une séquence vocale émise par un locuteur et, d'autre part, au moins une action du locuteur destinée à déclencher le traitement, qui permettrait de réduire les erreurs de reconnaissance qui pourraient survenir du fait d'une synchronisation imparfaite entre l'action de déclenchement exercée par le locuteur et le début, et également la fin, de la séquence vocale qu'il prononce.

La solution au problème technique posé consiste, selon la présente invention, en ce que l'opération de traitement est effectuée à partir d'un instant donné t₀ précédant l'action du locuteur.

Ainsi, on obtient que, si l'utilisateur a déclenché tardivement le traitement de reconnaissance par rapport au début de la séquence vocale, des informations temporellement antérieures à son action, mais relatives à la séquence, puissent être prises en compte par le système de reconnaissance afin de réduire les erreurs qui seraient dues à ce défaut de synchronisation.

Selon un premier mode de réalisation, l'opération de traitement consiste en un transfert, à partir de l'instant donné t₀, de segments de parole extraits de la séquence vocale à un système de reconnaissance automatique de la parole.

Dans ce mode de réalisation, le traitement de la séquence vocale par le système de reconnaissance de la parole est effectivement déclenché au moment de l'action de l'utilisateur, sur la touche « Push-to-Talk » par exemple, mais avec un effet rétroactif dans le passé, les segments de séquence compris dans l'intervalle de temps séparant l'instant donné t₀ et l'action de l'utilisateur, étant transmis immédiatement au système de reconnaissance.

Comme ces segments de séquence passés sont transmis sans délai au système et que le traitement de reconnaissance est en général plus rapide que le temps réel, le résultat de la reconnaissance pourra être fourni sans retard effectif malgré le temps nécessaire au système pour traiter la portion de séquence vocale antérieure à l'action de l'utilisateur.

La durée de l'intervalle de temps précédant l'action de l'utilisateur pour la prise en compte de la portion de séquence vocale supplémentaire à traiter doit être choisie suffisamment courte pour ne pas introduire un retard trop important, et suffisamment longue pour permettre une réelle compensation du défaut de synchronisation. A titre d'exemple, cette durée peut être de l'ordre de quelques centaines de millisecondes.

En pratique, l'invention prévoit que ledit transfert est effectué à travers une ligne à retard. En particulier, la ligne à retard est réalisée par un registre circulaire.

Selon un deuxième mode de réalisation, l'opération de traitement consiste en une validation, sur détection de début d'activité vocale entre l'instant donné t₀ et un instant donné t₁, de la reconnaissance automatique de la parole effectuée sur ladite séquence vocale.

Dans ce mode de réalisation, le traitement de reconnaissance de la parole est effectué en continu sur l'ensemble des séquences reçues par le système, indépendamment de toute action de l'utilisateur sur un dispositif « Push-to-Talk » par exemple. Au cours de ces séquences, chaque détection de parole engendre un évènement dit de début d'activité vocale. Ces évènements sont ensuite validés ou rejetés en fonction de leur compatibilité temporelle avec les actions de l'utilisateur. Plus précisément, ils seront validés s'ils se produisent dans un intervalle de temps encadrant l'action de l'utilisateur, et rejetés en dehors de cet intervalle, lequel est déterminé par une durée d'acceptation avant l'action de l'utilisateur et une durée d'acceptation après l'action de l'utilisateur.

On remarquera que le premier mode de réalisation à traitement rétroactif n'augmente pas la charge de calcul du système de reconnaissance, mais peut introduire un délai dans la réaction du système si celui-ci n'est pas assez rapide pour rattraper le retard à partir de l'action de l'utilisateur sur le dispositif « Push-to-Talk ». Par contre, le mode de réalisation en continu n'introduit aucun délai, mais augmente la charge de calcul du fait du traitement des détections non compatibles avec les actions sur le dispositif « Push-to-Talk ».

Les modes de réalisation qui précèdent concernent le problème de la synchronisation d'une action de l'utilisateur avec le début de la séquence vocale.

Concernant maintenant la synchronisation d'une action de l'utilisateur avec la fin de la séquence vocale, il est prévu par l'invention que le traitement de ladite séquence vocale par reconnaissance automatique de la parole est prolongé au-delà d'une deuxième action du locuteur indiquant une fin de séquence vocale.

La procédure de reconnaissance peut être prolongée d'une durée correspondant à la tolérance admise entre la fin de la séquence vocale et l'action de relâchement de la touche du dispositif « Push-to-Talk » par exemple.

Il faut noter que l'indication de fin de séquence par une action déterministe de l'utilisateur est facultative, le système de reconnaissance étant alors apte à détecter lui-même la fin de ladite séquence. Dans ce contexte, on peut envisager que l'action d'indication de début de séquence se traduise par une simple impulsion transmise au système de reconnaissance automatique de la parole. Au besoin, une nouvelle impulsion pourra indiquer au système la fin de la séquence.

La description qui va suivre en regard des dessins annexés, donnés à titre d'exemples non limitatifs, fera bien comprendre en quoi consiste l'invention et comment elle peut être réalisée.
La figure 1 est un chronogramme représentant : (a) un enregistrement sonore effectué par un microphone d'un terminal en communication avec un système de reconnaissance automatique de la parole, et (b) les éléments dudit enregistrement pris en compte pour le traitement par le système de reconnaissance selon un premier mode de réalisation du procédé conforme à l'invention.
La figure 2 est un schéma d'un terminal pour la mise en oeuvre dudit premier mode de réalisation de l'invention.
La figure 3 est un schéma d'un registre circulaire pour la mise en oeuvre dudit premier mode de réalisation de l'invention.
La figure 4 est un chronogramme représentant : (a) un enregistrement sonore effectué par un microphone d'un terminal en communication avec un système de reconnaissance automatique de la parole, et (b) les éléments dudit enregistrement pris en compte pour le traitement par le système de reconnaissance selon un deuxième mode de réalisation du procédé conforme à l'invention.

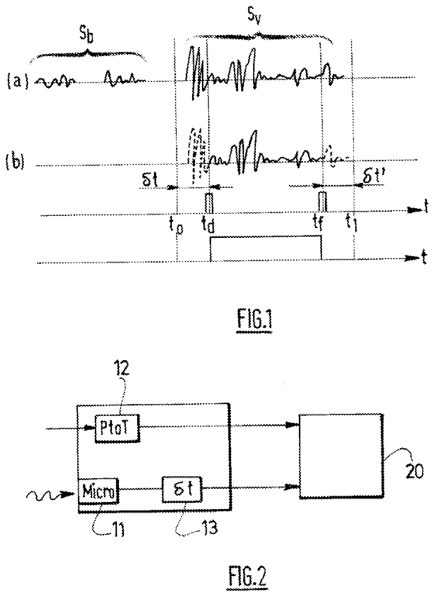

Sur la figure 2 est représenté un terminal équipé d'un microphone 11 principalement destiné à enregistrer des séquences vocales émises par un locuteur, notamment lors de ses échanges avec un serveur vocal 20 à travers un système de reconnaissance automatique de la parole. Notons que ledit système de reconnaissance peut être installé dans le serveur ou dans le terminai lui-même. L'invention toutefois est indépendante de l'implantation effective de ce système.

Comme le montre la figure 2, le terminal comporte également un dispositif « Push-to-Talk » 12 qui permet, par une action de l'utilisateur sur le bouton de ce dispositif, d'envoyer au système de reconnaissance une indication de début de séquence vocale, ainsi qu'éventuellement une indication de fin de séquence.

L'invention a pour but de remédier aux effets négatifs sur le traitement de reconnaissance que peut avoir une mauvaise synchronisation entre les actions de l'utilisateur et le début ou la fin de la séquence vocale prononcée.

La figure 1(a) montre un enregistrement brut des sons captés par le microphone 11 du terminal. Cet enregistrement fait apparaître une première séquence S_{b} correspondant par exemple à du bruit ambiant. Puis, commence une séquence vocale Sᵥ émise par le locuteur lors de son dialogue avec le serveur 20. Afin d'informer ledit serveur que la séquence Sᵥ qu'il prononce doit être traitée par le système de reconnaissance, l'utilisateur actionne à l'instant t_{d} une touche du dispositif «Push-to-Talk» 12 qui déclenche soit une impulsion, soit l'ouverture d'une fenêtre, comme le montre la figure 1(b).

Le traitement de reconnaissance de la séquence Sᵥ prend effet immédiatement à l'instant t_{d}. Il se peut cependant que l'utilisateur ait été tardif dans son action et que le début de la séquence Sᵥ indiqué en trait pointillé échappe au traitement de reconnaissance, avec toutes les conséquences néfastes que cette troncature peut avoir sur la qualité finale de la reconnaissance.

Pour résoudre ce problème, l'invention prévoit de prendre en compte dans le traitement de reconnaissance à effectuer des segments de parole contenus dans la partie tronquée de la séquence vocale Sᵥ à partir d'un instant t₀ antérieur à l'instant t_{d} de l'action de l'utilisateur.

Dans l'exemple de la figure 1, l'intervalle de temps *δ*t entre les instants t₀ et t_{d} est suffisamment long pour restaurer entièrement la partie manquante de la séquence Sᵥ. Dans ce cas, la qualité finale de la reconnaissance ne sera pas altérée. Par contre, si le retard est trop important, la partie tronquée de la séquence ne sera que partiellement prise en compte, ce qui conduira néanmoins à une amélioration de la reconnaissance, mais inférieure à celle qui serait obtenue avec une reconstitution totale.

Bien entendu, l'intervalle de temps *δ*t ne doit pas être trop long pour ne pas introduire un décalage dans la reconnaissance qui serait sensible à l'utilisateur. Il ne doit pas non plus être trop court, car sinon il rendrait inefficace le procédé de synchronisation, objet de l'invention.

La mise en oeuvre de ce procédé de synchronisation utilise une ligne 13 à retard disposée en série sur le microphone 11, ainsi que le montre la figure 2.

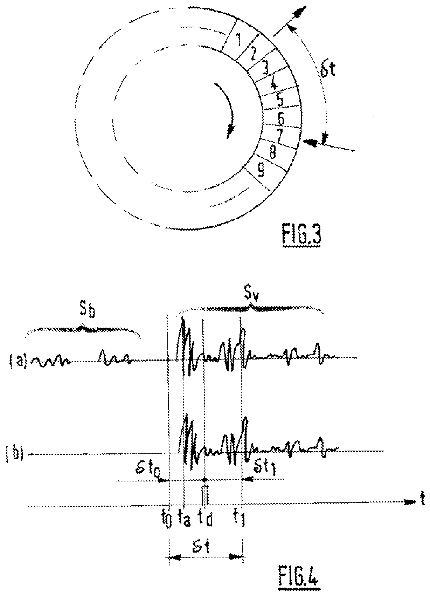

Ladite ligne 13 à retard peut être réalisée par un registre circulaire, comme indiqué sur la figure 3. Les échantillons de la séquence vocale numérotés 1, 2, 3,... sont écrits, puis lus et transférés au système de reconnaissance, avec la même vitesse, mais avec un retard en nombre d'échantillons correspondant au retard temporel *δ*t fixé. Après avoir été lus, les échantillons sont détruits au fur et à mesure.

Il faut préciser par ailleurs que la ligne à retard pourrait également agir sur les trames d'analyse du signal qui sont envoyées au système de reconnaissance. Plus généralement, la ligne à retard peut agir à tout endroit du flux entre le signal du microphone et l'entrée du système de reconnaissance.

Comme cela a déjà été mentionné, il est possible de transférer en bloc au système de reconnaissance la partie restaurée de la séquence, ce qui limite un éventuel retard dans la reconnaissance, ceci d'autant plus que le processus de reconnaissance est plus rapide que le temps réel.

L'avantage de ce premier mode de réalisation utilisant une ligne à retard est qu'il n'augmente pas la charge de calcul du système.

La figure 4 illustre une autre mise en oeuvre de l'invention qui consiste à traiter en continu le signal 4(a) issu du microphone 11 du terminal par un détecteur d'activité vocale. Le résultat de ce traitement est montré en 4(b) avec la prise en compte de la séquence Sᵥ après qu'elle ait été détectée comme séquence vocale à l'instant tₐ. Même si l'action de l'utilisateur sur le dispositif « Push-to-Talk » est survenue à l'instant t_{d} postérieure à l'instant tₐ de détection d'activité vocale, la séquence sera néanmoins validée si cette détection a lieu pendant l'intervalle *δ*t=*δ*t₀+*δ*t₁ entre les instants t₀ et t₁, comme on le voit sur la figure 4. *δ*t₀ est une durée d'acceptation avant l'action de l'utilisateur tandis que *δ*t₁ est une durée d'acceptation après l'action de l'utilisateur.

Ce mode de réalisation n'introduit aucun retard car il agit uniquement par filtrage sur le traitement normal de reconnaissance, mais, par contre, il augmente la charge de calcul du système

Comme le montre la figure 1, l'utilisateur peut également indiquer la fin de séquence vocale par une deuxième action sur le dispositif « Push-to Talk » à un instant t_{f} qui génère soit une impulsion de fin de séquence, soit la fermeture de la fenêtre ouverte en début de séquence. Il peut se produire dans ce cas aussi que l'utilisateur ait agi trop tôt, c'est-à-dire avant la fin de la séquence vocale Sᵥ. Au lieu de couper brutalement l'acquisition de la parole du locuteur à l'instant t_{f}, on propose de prolonger cette acquisition et d'alimenter le système de reconnaissance durant une durée *δ*t' correspondant à la tolérance sur la désynchronisation entre l'action de l'utilisateur et la fin de la séquence Sᵥ. Il faut noter que ce procédé n'introduit aucun retard supplémentaire mais réduit simplement les troncatures en fin d'énoncé.

## Revendications

1. Procédé de synchronisation entre, d'une part, une opération de traitement par reconnaissance automatique de la parole d'une séquence vocale (Sᵥ) émise par un locuteur et, d'autre part, au moins une action dudit locuteur destinée à déclencher ledit traitement, **caractérisé en ce que** ladite opération de traitement est effectuée à partir d'un instant (t₀) précédant ladite action du locuteur, l'intervalle de temps séparant ledit instant (t₀) et ladite action du locuteur étant un intervalle de temps donné.

2. Procédé selon la revendication 1, **caractérisé en ce que** ladite opération de traitement consiste en un transfert, à partir dudit instant (t₀), de segments de parole extraits de ladite séquence vocale (Sᵥ) à un système de reconnaissance automatique de la parole.

3. Procédé selon la revendication 2, **caractérisé en ce que** ledit transfert est effectué à travers une ligne (13) à retard.

4. Procédé selon la revendication 3, **caractérisé en ce que** ladite ligne (13) à retard est réalisée par un registre circulaire.

5. Procédé selon la revendication1, **caractérisé en ce que** ladite opération de traitement consiste en une validation, sur détection de début d'activité vocale entre ledit instant (t₀) et un instant donné (t₁), de la reconnaissance automatique de la parole effectuée sur ladite séquence vocale (Sᵥ).

6. Procédé selon l'une quelconque des revendications 1 à 5, **caractérisé en ce que** le traitement de ladite séquence vocale (Sᵥ) par reconnaissance automatique de la parole est prolongé au-delà d'une deuxième action du locuteur indiquant une fin de séquence vocale (Sᵥ).

## Patentansprüche

1. Verfahren zur Synchronisation zwischen einerseits einem Verarbeitungsvorgang durch automatische Spracherkennung einer von einem Sprecher ausgesendeten Sprachsequenz (Sᵥ) und andererseits mindestens einer Aktion des Sprechers, die dazu bestimmt ist, die Verarbeitung auszulösen, **dadurch gekennzeichnet, dass** der Verarbeitungsvorgang ausgehend von einem Zeitpunkt (t₀) vor der Aktion des Sprechers ausgeführt wird, wobei der den Zeitpunkt (t₀) und die Aktion des Sprechers trennende Zeitraum ein gegebener Zeitraum ist.

2. Verfahren nach Anspruch 1, **dadurch gekennzeichnet, dass** der Verarbeitungsvorgang aus einer Übertragung, ausgehend vom Zeitpunkt (t₀), von aus der Sprachsequenz (Sᵥ) entnommenen Sprachsegmenten an ein System zur automatischen Spracherkennung besteht.

3. Verfahren nach Anspruch 2, **dadurch gekennzeichnet, dass** die Übertragung über eine Verzögerungsleitung (13) erfolgt.

4. Verfahren nach Anspruch 3, **dadurch gekennzeichnet, dass** die Verzögerungsleitung (13) von einem Ringregister gebildet wird.

5. Verfahren nach Anspruch 1, **dadurch gekennzeichnet, dass** der Verarbeitungsvorgang aus einer Validierung, bei Erfassung des Beginns einer Sprachaktivität zwischen dem Zeitpunkt (t₀) und einen gegebenen Zeitpunkt (t₁), der an der Sprachsequenz (Sᵥ) ausgeführten automatischen Spracherkennung in besteht.

6. Verfahren nach einem der Ansprüche 1 bis 5, **dadurch gekennzeichnet, dass** die Verarbeitung der Sprachsequenz (Sᵥ) durch automatische Spracherkennung über eine zweite Aktion des Sprechers hinaus verlängert wird, die ein Ende einer Sprachsequenz (Sᵥ) angibt.

## Claims

1. Method for synchronization between an automatic speech recognition processing operation on a voice sequence (Sᵥ) uttered by a speaker, on the one hand, and at least one action of said speaker that is intended to trigger said processing, on the other hand, **characterized in that** said processing operation is performed starting from an instant (t₀) preceding said action of the speaker, the time interval separating said instant (t₀) and said action of the speaker being a given time interval.

2. Method according to Claim 1, **characterized in that** said processing operation consists of a transfer, starting from said instant (t₀), of speech segments extracted from said voice sequence (Sᵥ) to an automatic speech recognition system.

3. Method according to Claim 2, **characterized in that** said transfer is performed through a delay line (13).

4. Method according to Claim 3, **characterized in that** said delay line (13) is formed by a circular register.

5. Method according to Claim 1, **characterized in that** said processing operation consists of a confirmation, upon detection of a start of a voice activity between said instant (t₀) and a given instant (t₁), of the automatic speech recognition performed on said voice sequence (Sᵥ).

6. Method according to any one of Claims 1 to 5, **characterized in that** the processing of said voice sequence (Sᵥ) by automatic speech recognition is extended beyond a second action of the speaker indicating an end of the voice sequence (Sᵥ).
